# EUROPÄISCHE PATENTSCHRIFT

(11) **EP 4 102 010 B1**
(45) Veröffentlichungstag und Bekanntmachung des Hinweises auf die Patenterteilung: **14.08.2024**
(21) Anmeldenummer: 22177821.0
(22) Anmeldetag: 08.06.2022
(51) Int. Cl.: E05B 47/02, H02H 3/06, H02H 3/20

(54) **STEUERUNGSVORRICHTUNG MIT ÜBERSPANNUNGSSCHUTZ**
CONTROL DEVICE WITH OVERVOLTAGE PROTECTION
DISPOSITIF DE COMMANDE À PROTECTION CONTRE LES SURTENSIONS

(30) Priorität: 08.06.2021 DE 102021114699
(43) Veröffentlichungstag der Anmeldung: 14.12.2022
(73) Patentinhaber: ASSA ABLOY Sicherheitstechnik GmbH, 72458 Albstadt (DE)
(72) Erfinder: MÜLLER, Wolfgang, 72458 Albstadt (DE)
(74) Vertreter: Louis Pöhlau Lohrentz

(56) Entgegenhaltungen:
- EP-A1- 3 361 588
- DE-A1- 3 402 222
- DE-U1- 202008 011 189
- ES-U- 1 073 827
- KR-A- 20200 045 340

## Beschreibung

Die Erfindung betrifft eine Steuerungsvorrichtung für eine in oder an einer Türe oder eines Fensters eines Gebäudes angeordnete Verriegelungsvorrichtung nach den Merkmalen des Oberbegriffs des Anspruchs 1.

In der Praxis werden solche Steuerungsvorrichtungen mit Spannungen zwischen 6V und 24V versorgt und über ein Netzteil an ein vorhandenes Hausnetz angeschlossen. Dabei ist es notwendig, die Steuerungsvorrichtung gegen Überspannungen abzusichern. Überspannungen können beispielsweise durch ein defektes Netzteil, durch Blitzschlag oder durch Spannungsspitzen, die in dem Hausnetz vorhanden sind, auftreten. Werden solche Überspannungen nicht unterdrückt, besteht die Gefahr, dass die Steuerungsvorrichtung beschädigt wird. In der Praxis werden daher zur Absicherung oftmals Suppressordioden oder auch TVS-Dioden in Verbindung mit einer

Feinsicherung eingesetzt. Solche Schutzschaltungen haben den Nachteil, dass bei einem Auslösen des Überspannungsschutzes, die Feinsicherung zerstört wird und einen manuellen Eingriff erforderlich macht. Dadurch kommt es zu unangenehm langen Ausfallzeiten der Steuerungsvorrichtung. Zudem ist die Ansprechdauer einer solchen Überspannungsschutzvorrichtung relativ träge, sodass dennoch die Gefahr einer Beschädigung der Steuerungsvorrichtung besteht.

Aus der KR 2020 0045340 A ist eine Steuervorrichtung für eine Verriegelungsvorrichtung mit den Merkmalen des Oberbegriffs des Anspruchs 1 bekannt.

Weiterhin offenbart die ES 1 073 827 U eine elektrische Türöffner mit einer Diodebrücke als Gleichrichter so dass bei Montage- und Wartungsarbeiten die Polarität der Anschlussklemmen nicht zu berücksichtigen ist.

Der Erfindung liegt die Aufgabe zugrunde, eine Steuerungsvorrichtung zu schaffen, die eine erhöhte Betriebssicherheit, verbunden mit einer geringen Ausfallzeit, aufwiest. Insbesondere soll die erfindungsgemäße Steuerungsvorrichtung einen wirksamen Überspannungsschutz aufweisen.

Diese Aufgabe wird erfindungsgemäß durch eine Steuerungsvorrichtung mit den Merkmalen des Anspruchs 1 gelöst. Ferner wird die Aufgabe erfindungsgemäß durch ein Verfahren zum Absichern einer Steuerungsvorrichtung gemäß den Merkmalen des Anspruchs 13 gelöst. Erfindungsgemäß ist eine Steuerungsvorrichtung für eine in oder an einer Türe oder eines Fensters eines Gebäudes angeordnete Verriegelungsvorrichtung vorgesehen, vorzugsweise für einen Türantrieb und/oder Fensterantrieb und/oder eine Feststellvorrichtung und/oder ein Türschloss und/oder einen Türöffner, umfassend wenigstens einen, vorzugsweise schaltbaren Ausgang, zum Ansteuern eines Aktors oder eines Elektromagneten oder eines Motors der Verriegelungsvorrichtung, sowie einen Stromversorgungsanschluss, um die Steuerungsvorrichtung über eine Versorgungsleitung an ein Stromversorgungsnetzteil anzuschließen, weiter umfassend eine mit dem Stromversorgungsanschluss verbundene Schutzschaltung, um die Steuerungsvorrichtung und/oder eine an diese angeschlossene Verriegelungsvorrichtung gegen Überspannung zu schützen. Wesentlich dabei ist, dass die Schutzschaltung einen steuerbaren Widerstand und/oder einen Halbleiterschalter aufweist, der in Serie zu der Versorgungsleitung angeordnet ist, sowie einen Schwellwertschalter aufweist, dessen Eingang mittelbar oder unmittelbar mit der Versorgungsleitung verbunden ist, um die an der Versorgungsleitung anliegende Spannung zu messen, wobei der Schwellwertschalter den steuerbaren Widerstand und/oder den Halbleiterschalter zum Trennen der Versorgungsleitung ansteuert wenn die an der Versorgungsleitung anliegende Spannung oberhalb eines vorgegebenen Spannungswertes liegt. Erfindungsgemäß weist die Schutzschaltung zwischen Stromversorgungsanschluss und dem steuerbaren Widerstand und/oder dem Halbleiterschalter eine Verpolschutzschaltung auf.

Es ist somit vorgesehen, dass der Eingang des Schwellwertschalter mittelbar mit der Versorgungsleitung verbunden ist vorzugsweise ständig verbunden ist, um deren Spannung zu messen. Über den Schwellwertschalter können so auch kurze Spannungsspitzen bzw. Überspannungs-Peaks erfasst werden. Durch die Verwendung eines steuerbaren Widerstandes oder eines Halbleiterschalters ist ein schnelles Ansprechen der Schutzschaltung möglich. So kann auch bei kurzen Spannungsspitzen die Steuervorrichtung effizient geschützt werden.

Insbesondere wird unter Verriegelungsvorrichtung eine Vorrichtung verstanden, die in oder an einer Türe oder eines Fensters eines Gebäudes installiert ist oder mit einem solchen zusammenwirkt. Die Verriegelungsvorrichtung kann den Flügel der Türe oder des Fensters in einer Position fixieren. Beispielsweise kann die Verriegelungsvorrichtung den Flügel einer Türe oder eines Fensters in Schließlage oder in einer Offenstellung fixieren, halten oder verriegeln. In diesem Sinne können als Verriegelungsvorrichtung beispielsweise Türantriebe oder Fensterantriebe angesehen werden, die bei stromlos Schaltung oder in einer Halteposition einen Türflügel oder einen Fensterflügel in einer bestimmten Position halten und/oder fixieren und/oder verriegeln. Ebenso können Feststellvorrichtungen und/oder Türschlösser und/oder Türöffner entsprechend als Verriegelungsvorrichtung angesehen werden.

Vorzugsweise weist die Verriegelungsvorrichtung einen Aktor auf, mit dessen Hilfe eine Verriegelung oder ein Fixieren oder ein Halten eines Türflügels oder eines Fensterflügels schaltbar möglich ist. Über den schaltbaren Ausgang der Steuerungsvorrichtung kann ein entsprechender Aktor angesteuert werden, um den Türflügel oder Fensterflügel in einer Position zu Verriegeln oder zu Fixieren oder zu Halten.

Vorteilhafterweise müssen nicht, wie im Stand der Technik bei Suppressordioden in Verbindung mit einer Feinsicherung notwendig hohe Ströme fließen, um die Feinsicherung auszulösen. Die Schutzschaltung arbeitet insbesondere spannungsbasiert und benötigt kaum zusätzliche Ströme. Der zusätzliche Stromverbrauch bewegt sich in der Region der zur Versorgung der Schutzschaltung notwendigen Ströme. Dadurch wird die Verlustleistung gering gehalten und es entsteht keine störende Abwärme.

Vorzugsweise wird der steuerbare Widerstand oder der Halbleiter gesperrt, sobald der Wert der Spannung an der Versorgungsleitung bzw. an dem Stromversorgungsanschluss oberhalb eines vorgegebenen Spannungswertes liegt. Sobald die Spannung der Versorgungsleitung bzw. die Spannung am Stromversorgungsanschluss wieder normales Spannungsniveau aufweist, schaltet die Schutzschaltung den steuerbaren Widerstand oder den Halbleiterschalter automatisch wieder ein und verbindet die Versorgungsleitung automatisch mit der Steuervorrichtung. Dies erfolgt, ohne dass ein manueller Eingriff notwendig ist. D.h. im Falle einer Überspannungsauslösung ist keine manuelle Rückstellung nötig und es ist auch kein Tausch von Sicherungen oder Ersatzteilen notwendig. Dadurch wird die Zuverlässigkeit der Steuervorrichtung erhöht und die notwendigen Wartungsarbeiten werden reduziert.

Insbesondere ist der Eingang des Schwellwertschalters ständig mit der Versorgungsleitung bzw. dem Stromversorgungsanschluss verbunden. D.h. der Eingang des Schwellwertschalters ist mit dem Stromversorgungseingang bzw. der Versorgungsleitung verbunden und wird nicht durch den steuerbaren Widerstand bzw. Halbleiterschalter von der Versorgungsleitung oder dem Stromversorgungsanschluss getrennt.

Der vorgegebene Spannungswert kann ein fest eingestellter oder fest vorgegebener Spannungswert sein. Alternativ kann der vorgegebene Spannungswert einstellbar sein, beispielsweise um die Schaltschwelle der Schutzschaltung anzupassen.

Die Steuerungsvorrichtung zum Ansteuern einer Verriegelungsvorrichtung kann im einfachsten Fall, beispielsweise einen Schalter oder Taster umfassen, der einen Türöffner ansteuert und/oder eine Halte- oder Verriegelungsvorrichtung ansteuert. Es kann sich beispielsweise um einen Türöffner oder um einen mechanischen Notschalter handeln. Alternativ oder ergänzend kann die Steuervorrichtung jedoch auch eine elektronische Steuervorrichtung mit einem Microprozessor umfassen, der den wenigstens einen schaltbaren Ausgang der Steuerungsvorrichtung ansteuert, um einen Türöffner und/oder ein Motorschloss und/oder einen Antrieb und/oder eine Haltevorrichtung einer Tür und/oder eines Fensters zu steuern. Die Steuerungsvorrichtung kann auch ein oder mehrere Eingänge aufweisen, and denen Bedienelemente und/oder Sensoren angeschlossen werden können.

Erfindungsgemäß ist auch ein Verfahren zum Absichern einer Steuerungsvorrichtung für eine in oder an einer Türe oder eines Fensters eines Gebäudes angeordnete Verriegelungsvorrichtung vorgesehen, vorzugsweise für einen Türantrieb und/oder einen Fensterantrieb und/oder eine Feststellvorrichtung und/oder ein Türschloss und/oder einen Türöffner, umfassend wenigstens einen, vorzugsweise schaltbaren, Ausgang zum Ansteuern eines Aktors oder eines Elektromagneten oder eines Motors der Verriegelungsvorrichtung sowie einen Stromversorgungsanschluss, um die Steuerungsvorrichtung an ein Netzteil anzuschließen. Wesentlich dabei ist, dass über einen von einem Schwellwertschalter angesteuerten Transistor oder MOSFET der Stromversorgungsanschluss abgetrennt wird, wenn die Versorgungsspannung an dem Stromversorgungsanschluss oberhalb eines vorgegebenen Spannungswertes liegt und wieder über den Transistor oder den MOSFET verbunden wird, sobald der Spannungswert der Versorgungsspannung unterhalb des vorgegebenen Spannungswertes liegt.

Vorzugsweise wird durch die Schutzschaltung die Spannungsversorgung selbstständig und ohne Eingriff wieder eingeschaltet, sobald der Wert der Spannung an der Versorgungsleitung oder dem Stromversorgungsanschluss wieder in den definierten Bereich absinkt.

In einer Anwendung kann jedoch auch vorgesehen sein, dass der Stromversorgungsanschluss erst dann wieder verbunden wird, wenn der Spannungswert der Versorgungsspannung unterhalb eines zweiten Spannungswertes liegt, wobei der zweite Spannungswert kleiner ist als der vorgegebene Spannungswert. Dadurch kann eine Schalthysterese realisiert werden, wodurch die Stabilität der Schutzschaltung erhöht werden kann.

Vorzugsweise kann ein Zeitglied vorgesehen sein und der Stromversorgungsanschluss frühestens nach Verstreichen einer durch das Zeitglied vorgebbaren Zeitdauer wieder verbunden werden. Über das Zeitglied kann eine Mindestausschaltdauer definiert werden, um bei kurzfristigen Spannungs-Peaks ein Flattern der Schutzschaltung zu verhindern.

In einer vorzugsweisen Ausgestaltung kann vorgesehen sein, dass der steuerbare Widerstand und/oder der Halbleiterschalter als FET (Feldeffekttransistor) ausgebildet ist, insbesondere als JFET oder MOSFET, oder IGFET oder MISFET.

Insbesondere kann ein MOSFET verwendet werden, dessen Ein-Widerstand, sprich der Widerstand zwischen Drain und Source im eingeschalteten Zustand sehr klein ist. Vorzugsweise kleiner gleich 0,1 Ω oder kleiner gleich 0,05 Ω. Dadurch wird zum einen der Spannungsabfall an dem Halbleiterschalter reduziert und zum anderen die anfallende Abwärme reduziert.

Um einen einfachen Schaltungsaufbau zu realisieren kann vorgesehen sein, dass der Schwellwertschalter als diskreter Schwellwertschalter ausgebildet ist, insbesondere als zweistufiger Schwellwertschalter ausgebildet ist, vorzugswiese zwei bipolare Transistoren aufweist. Alternativ kann als Stellwertschalter auch eine Operationsverstärker oder ein Schmitt-Trigger eingesetzt werden.

Insbesondere kann vorgesehen sein, dass der vorgegebene Spannungswert über eine Spannungsreferenz, beispielsweise mittels eine durch eine integrierte Schaltung gelieferte Spannungsreferenz oder über eine Z-Diode einstellbar ist. Vorzugsweise kann eine Z-Diode den Eingang des Schwellwertschalters mit der Versorgungsleitung verbinden oder mit Masse verbinden. Dadurch ist eine einfache Vorgabe des Spannungswertes möglich, indem eine Z-Diode, oder eine Spannungsreferenz, mit einer entsprechenden Durchbruchspannung verwendet wird. Beispielsweise kann eine Z-Diode mit einer Durchbruchspannung von 13,5V oder 14V verwendet werden, um eine 12V Versorgungsleitung abzusichern. So lange die Spannung der Versorgungsleitung in dem definierten Bereich, d.h. bei 12 V liegt, sperrt die Z-Diode. Erst wenn die Versorgungsspannung über den definierten Bereich ansteigt, wird die Z-Diode leitend und der Schwellwertschalter spricht an.

Insbesondere kann vorgesehen sein, dass an einem Spannungsausgang der Schutzschaltung ein Filterkondensator, oder Siebkondensator oder Ladekondensator zwischen Masse und Spannungsausgang vorgesehen ist, um kurze Spannungsunterbrechungen zu überbrücken. Über den Filterkondensator, oder Siebkondensator oder Ladekondensator können kurze Spannungsunterbrechungen geglättet werden.

Vorzugsweise kann vorgesehen sein, dass an dem Spannungsausgang der Schutzschaltung ein passives Filternetzwerk vorgesehen ist, aufweisend wenigstens eine Spule und einen Kondensator, um EMV-Störungen zu filtern oder unterdrücken.

In einer Ausgestaltung kann vorgesehen sein, dass der Stromversorgungsanschluss über eine Leitung, vorzugsweise über die Versorgungsleitung, mit einem, vorzugsweise räumlich abgesetzten, SELV-Netzteil verbunden ist. Insbesondere kann zur Stromversorgung ein Self-Netzteil verwendet werden. Ein SELV-Netzteil (***s**afety **e**xtra **l**ow **v**oltage)* stellt eine Sicherheitskleinspannung bereit, die aufgrund ihrer geringen Höhe einen gewissen Schutz gegen elektrische Schläge bietet. Insbesondere können Netzteile der Schutzklasse 3 verwendet werden. Auch im Fehlerfall ist bei dem SELV-Netzteil sichergestellt, dass eine bestimmt Maximalspannung niemals überschritten wird, vorzugsweise dass die Spannung niemals höher als 60V wird. Dieser Betrag stellt zwar eine gewisse Sicherheit dar, wäre jedoch für eine Verriegelungsvorrichtung an eine Türe oder eines Fensters oder die Steuervorrichtung eine zu hohe Spannung, die zu einer Zerstörung führen könnte. Daher trennt die erfindungsgemäße Schutzschaltung die Steuerungsvorrichtung bzw. die an die Steuerungsvorrichtung angeschlossene Verriegelungsvorrichtung im Falle von Defekten des Netzteils zuverlässig von der Versorgungsspannung ab. Dadurch wird die Gefahr von Zerstörungen reduziert.

Erfindungsgemäß ist vorgesehen, dass die Schutzschaltung zwischen Stromversorgungsanschluss und dem steuerbaren Widerstand und/oder dem Halbleiterschalter eine Verpolschutzschaltung aufweist. Dadurch kann die Zuverlässigkeit weiter erhöht werden, indem auch beispielsweise bei Montagefehlern und verpoltem Anschluss der Versorgungsleitung sichergestellt ist, dass die Steuerungsvorrichtung keinen Schaden nimmt.

Beispielsweise kann vorgesehen sein, dass die Verpolschutzschaltung einen in Serie mit der Versorgungsleitung geschalteten Transistor, vorzugsweise einen MOSFET, insbesondere einen P-MOSFET aufweist. Durch die Verwendung eines MOSFETs als Verpolschutz wird eine deutlich geringere Verlustleistung und ein deutlich geringerer Spannungsabfall als beispielsweise bei einer Diode realisiert.

In einer Ausgestaltung kann vorgesehen sein, dass der steuerbare Widerstand und/oder der Halbleiterschalter und der Transistor der Verpolschutzschaltung als MOSFET ausgebildet sind. Vorzugsweise, dass für den MOSFET der Verpolschutzschaltung und für den MOSFET des steuerbaren Widerstands und/oder des Halbleiterschalters derselbe Transistortyp verwendet wird.

Vorzugsweise kann vorgesehen sein, dass der wenigstens eine, vorzugsweise schaltbare, Ausgang einen Halbleiter zum Ansteuern eines Aktors oder eines Elektromagneten oder eines Motors der Verriegelungsvorrichtung aufweist, vorzugsweise einen Transistor oder einen FET oder ein Halbleiterrelais, und dass der vorzugsweise schaltbare Ausgang zum Steuern von induktiven Lasten, vorzugsweise bis 2 Ampere, ausgebildet ist.

Um an die Steuerungsvorrichtung unterschiedliche Verbraucher anschließen zu können kann vorgesehen sein, dass wenigstens einer der, vorzugsweise schaltbaren, Ausgänge als PWM-Ausgang zum Ansteuern eines Aktors oder eines Elektromagneten oder eines Motors der Verriegelungsvorrichtung ausgebildet ist. Durch einen PWM- Ausgang, also einen pulsweiten modellierten Ausgang, können beispielsweise Elektromagnete, oder Motoren, oder allgemein Verbraucher angeschlossen werden, deren Spannungsniveau kleiner ist als die Spannung der Versorgungsleitung. Beispielsweise kann ein 6V Motor oder ein 6V Elektromagnet an eine 12V Versorgungsleitung angeschlossen werden, indem der PWM-Ausgang entsprechend moduliert wird, und eine Überlastung des angeschlossenen Verbrauchers dadurch verhindert wird.

In einer Ausgestaltung kann vorgesehen sein, dass die Steuerungsvorrichtung wenigstens einen Sensoreingang zum Anschließen eines Sensors, insbesondere eines Schließlagesensors einer Tür oder eines Fensters, oder eines Riegelsensors, oder eines Schalters, insbesondere eines Notschalters einer Fluchtwegsicherung aufweist, sowie vorzugsweise einen Mikroprozessor zum Lesen des wenigstens einen Sensoreingangs und zum Ansteuern des wenigstens einen schaltbaren Ausgangs, aufweist.

Um die Steuerungsvorrichtung in Haussysteme zu integrieren kann vorgesehen sein, die Steuerungsvorrichtung wenigstens eine digitale Bus-Schnittstelle, insbesondere eine serielle, drahtgebundene Bus-Schnittstelle und/oder eine drahtlose Bus-Schnittstelle, aufweist. Insbesondere kann ein serieller Bus, beispielsweise ein CAN-Bus verwendet werden. Alternativ kann jedoch auch eine drahtlose Busschnittstelle, beispielsweise wireless, WLAN, oder Bluetooth oder ZigBee verwendet werden.

Um die Steuerungsvorrichtung kostengünstig herstellen zu können kann vorgesehen sein, dass die Steuerungsvorrichtung eine gemeinsame Platine, insbesondere nur eine einzige Platine, aufweist, auf der die Schutzschaltung und der Stromversorgungsanschluss sowie der wenigstens eine schaltbare Ausgang zum Ansteuern eines Aktors oder eines Elektromagneten oder eines Motors der Verriegelungsvorrichtung gemeinsam angeordnet sind. Vorzugsweise kann die Steuerungsvorrichtung auch mehrere untereinander verbundene Platinen umfassen. Sofern der zur Verfügung stehende Bauraum reduziert oder verwinkelt ist, kann ein an den verwinkelten Bauraum angepasster, bzw. ein möglichst raumsparender Aufbau erzielt werden.

Eine Anwendung der erfindungsgemäßen Steuerungsvorrichtung kann beispielsweise bei Neuinstallationen von Türkomponenten oder Fensterkomponenten erfolgen. Jedoch kann die erfindungsgemäße Steuerungsvorrichtung beispielsweise auch bei Nachrüstungen oder Aufrüstungen bestehender Hausinstallationen verwendet werden.

Weitere Ausführungsbeispiele der Erfindung sind in den Figuren gezeigt und nachfolgend beschrieben. Dabei zeigen:
- **Fig. 1:**: eine schematische Darstellung der erfindungsgemäßen Steuerungsvorrichtung an einer Türe eines Gebäudes;
- **Fig. 2:**: ein Beispiel eines Schaltbilds einer Schutzschaltung der erfindungsgemäßen Steuerungsvorrichtung.

In den Figuren wird ein Beispiel einer erfindungsgemäßen Ausgestaltung gezeigt. Dieses Beispiel dient der Erläuterung einer möglichen Ausgestaltung der Erfindung und soll nicht einschränkend verstanden werden.

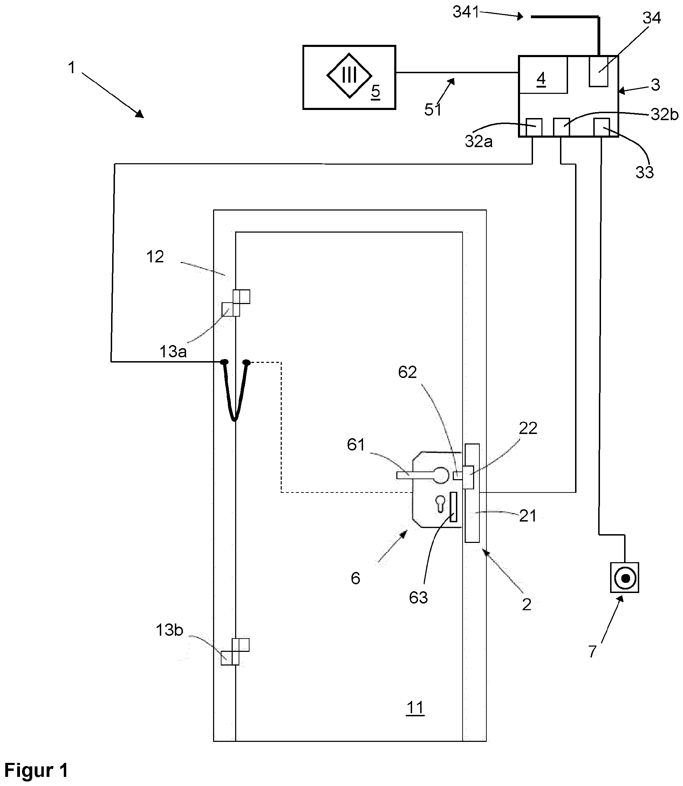

Fig. 1 zeigt eine Türvorrichtung 1 an einer Gebäudetür. Diese umfasst eine Türe mit einem über Bänder 13a und 13b an einem Türrahmen 12 schwenkbar gelagerten Türflügel 11. Der Türflügel 11 weist ein Türschloss 6 mit einer Schlossfalle 62 und einer Türklinke 61 auf. Die Schlossfalle 62 ist als

Riegelelement ausgebildet und wirkt mit einem rahmenseitig angeordneten Türöffner 2 zusammen. Der Türöffner 2 weist ein Türöffnergehäuse 21 auf, indem eine schaltbare Türöffnerfalle 22 angeordnet ist. In der Schließstellung des Türflügels 11 greift die Schlossfalle 62 in die Türöffnerfalle 22 ein und wird von dieser schaltbar fixiert oder freigegeben.

In dem Türschloss 6 ist ein motorischer Antrieb 63 angeordnet, um das Türschloss 6 motorisch zu entriegeln und/oder zu verriegeln.

Eine Steuerungsvorrichtung 3 ist vorgesehen, um das Türschloss 6 und den Türöffner 2 zu steuern. Die Steuerungsvorrichtung 3 weist einen ersten schaltbaren Ausgang 32a auf, der über eine Leitung und einen flexiblen Kabelübergang mit dem in dem Türflügel 11 angeordneten Türschloss verbunden ist. Ein zweiter schaltbarer Ausgang 32b ist mit dem Türrahmen seitig angeordneten Türöffner 2 verbunden, um die schaltbare Türöffnerfalle 22 zu schalten. An einem Eingang 33 ist ein Nottaster 7 angeschlossen, um im Notfall die Verriegelung des Türflügels 11 aufheben zu können. Die Steuerungsvorrichtung 3 weist eine digitale Bus-Schnittstelle 34 auf, die an einen serielle Bus 341 angeschlossen ist, welcher die Steuerungsvorrichtung 3 mit einer übergeordneten Steuerzentrale verbindet.

Die Stromversorgung der Steuerungsvorrichtung 3 erfolgt über ein Netzteil 5, welches mittels der Versorgungsleitung 51 mit der Steuerungsvorrichtung 3 verbunden ist.

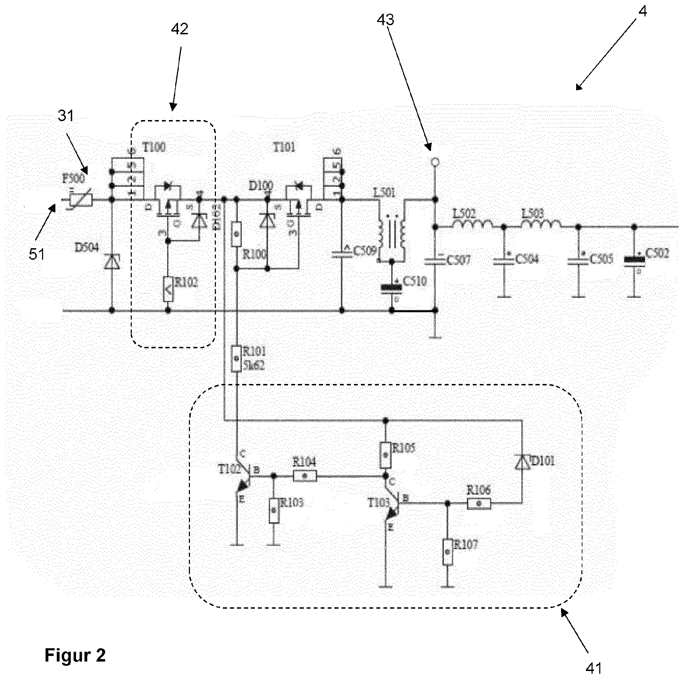

Wie in Fig. 2 dargestellt, ist die Versorgungsleitung 51 an dem Stromversorgungsanschluss 31 der Schutzschaltung 4 angeschlossen. Die Schutzschaltung 4 weist eine Verpolschutzschaltung 42 sowie einen Schwellwertschalter 41 auf. Die Verpolschutzschaltung 42 weist einen P-Kanal MOSFET T100 auf, der im Falle einer versehentlichen Verpolung die Versorgungsspannung sperrt. Damit ist die Schutzschaltung 4 und die an die Schutzschaltung angeschlossene Steuerungsvorrichtung 3 geschützt.

Der Schwellwertschalter 41 ist über eine Z-Diode D101 mit dem Ausgang der Verpolschutzschaltung 42 verbunden. Der Schwellwertschalter 41 ist diskret aufgebaut, d. h. er weist zwei bipolare Transistoren T102, T103 auf. Der Ausgang des Schwellwertschalters 41 ist mit dem Eingang bzw. mit dem Gate des schaltbaren Halbleiterschalters T101 verbunden.

Als schaltbarer Halbleiterschalter bzw. steuerbarer Widerstand wird ein MOSFET T101 verwendet, dessen Source mit dem Ausgang der Verpolschutzschaltung 42 verbunden ist, und dessen Drain als Ausgang zur Versorgung der Steuerungsvorrichtung dient und dessen Gate mit dem Schwellwerthalter verbunden ist. Sobald durch den Schwellwertschalter 41 eine Überspannung an der Verpolschutzschaltung 42 bzw. der Versorgungsleitung 51 detektiert wird, schaltet dieser den schaltbaren Widerstand in Form des Transistors T101 auf Sperren und trennt somit die nachfolgende Steuerungsvorrichtung bzw. die an diese angeschlossenen Komponenten einer Verriegelungsvorrichtung einer Tür oder eines Fensters von der Versorgungsspannung ab.

Am Ausgang der Schutzschaltung 4 ist eine LC-Anordnung vorgesehen, um die Steuerungsvorrichtung von EMV-Störungen zu filtern. Ein Ladekondensator C509 bzw. C510 ist vorgesehen, um die Versorgungsspannung zu glätten. Über Drosseln L 501 bzw. ein LC-Netzwerk C507, L 502 und L 503 und C504 werden elektromagnetische Störungen unterdrückt.

Am Ausgang der Schutzschaltung 4 ist ein Spannungsausgang 43 vorgesehen. Der Spannungsausgang 43 ist mit weiteren Komponenten der Steuerungsvorrichtung bzw. mit einer Verriegelungsvorrichtung einer Tür oder eines Fensters verbunden, um diese mit Strom zu versorgen.

Im Falle, dass der Schwellwertschalter 41 eine Überspannung am Ausgang der Verpolschutzschaltung 42 detektiert, sperrt dieser den steuerbaren Widerstand T101 (schaltet diesen hochohmig) und trennt somit den Spannungsausgang 43 von der Versorgungsleitung 51 ab. Dadurch werden auch die an die Schutzschaltung 4 angeschlossenen Komponenten stromlos geschaltet und können also durch Überspannungen nicht zerstört werden. Sobald die Spannung der Versorgungsleitung 51 wieder in den definierten Bereich absinkt, steuert der Schwellwertschalter 41 den steuerbaren Widerstand T101 an (schaltet diesen leitend), sodass dieser eingeschaltet wird, d.h. einen geringen ohmschen Widerstand aufweist und den Spannungsausgang 43 mit der Versorgungsleitung 51 verbindet und so die daran angeschlossenen Komponenten mit elektrischem Strom versorgt.

### Bezugszeichenliste

- 1: Türvorrichtung
- 11: Türflügel
- 12: Türrahmen
- 13a: Türband
- 13b: Türband

- 2: Türöffner
- 21: Türöffnergehäuse
- 22: Türöffnerfalle

- 3: Steuerungsvorrichtung
- 31: Stromversorgungsanschluss
- 32a: schaltbarer Ausgang
- 32b: schaltbarer Ausgang
- 33: Sensoreingang
- 34: Busschnittstelle
- 341: digitaler Bus

- 4: Schutzschaltung
- 41: Schwellwertschalter
- 42: Verpolschutzschaltung
- 43: Spannungsausgang
- 5: Netzteil
- 51: Versorgungsleitung

- 6: Schloss
- 61: Türklinke
- 62: Schloßfalle
- 63: Motor

- 7: Nottaster

## Patentansprüche

1. Steuerungsvorrichtung (3) für eine in oder an einer Türe oder eines Fensters eines Gebäudes angeordnete Verriegelungsvorrichtung (2, 6), vorzugsweise für einen Türantrieb und/oder Fensterantrieb und/oder eine Feststellvorrichtung und/oder ein Türschloss (6) und/oder einen Türöffner (2),
umfassend wenigstens einen, vorzugsweise schaltbaren, Ausgang (32a, 32b) zum Ansteuern eines Aktors oder eines Elektromagneten oder eines Motors (63) der Verriegelungsvorrichtung (2, 6),
sowie einen Stromversorgungsanschluss (31), um die Steuerungsvorrichtung (3) über eine Versorgungsleitung (51) an ein Stromversorgungsnetzteil (5) anzuschließen,
weiter umfassend eine mit dem Stromversorgungsanschluss (31) verbundene Schutzschaltung (4), um die Steuerungsvorrichtung (3) und/oder eine an diese angeschlossene Verriegelungsvorrichtung gegen Überspannung zu schützen, wobei die Schutzschaltung (4) einen steuerbaren Widerstand (T101) und/oder einen Halbleiterschalter aufweist, der in Serie zu der Versorgungsleitung (51) angeordnet ist, sowie einen Schwellwertschalter (41) aufweist, dessen Eingang mittelbar oder unmittelbar mit der Versorgungsleitung (51) verbunden ist, um die an der Versorgungsleitung (51) anliegende Spannung zu messen, wobei der Schwellwertschalter (41) den steuerbaren Widerstand (T101) und/oder den Halbleiterschalter zum Trennen der Versorgungsleitung (51) ansteuert wenn die an der Versorgungsleitung (51) anliegende Spannung oberhalb eines vorgegebenen Spannungswertes liegt,
**dadurch gekennzeichnet,**
**dass** die Schutzschaltung (4) zwischen Stromversorgungsanschluss (31) und dem steuerbaren Widerstand (T101) und/oder dem Halbleiterschalter eine Verpolschutzschaltung (42) aufweist.

2. Steuerungsvorrichtung nach Anspruch 1,
**dadurch gekennzeichnet,**
**dass** der steuerbare Widerstand (T101) und/oder der Halbleiterschalter als FET (Feldeffekttransistor) ausgebildet ist, insbesondere als JFET oder MOSFET (T101), oder IGFET oder MISFET.

3. Steuerungsvorrichtung nach Anspruch 1 oder 2,
**dadurch gekennzeichnet,**
**dass** der Schwellwertschalter (41) als diskreter Schwellwertschalter ausgebildet ist, insbesondere als zweistufiger Schwellwertschalter ausgebildet ist, vorzugswiese zwei bipolare Transistoren (T102, T103) aufweist.

4. Steuerungsvorrichtung nach einen der Ansprüche 1 bis 3,
**dadurch gekennzeichnet,**
**dass** der vorgegebene Spannungswert über eine Spannungsreferenz, insbesondere eine Z-Diode (D101), einstellbar ist, vorzugsweise dass die Z-Diode (D101) einen Eingang des Schwellwertschalters (41) mit der Verpolschutzschaltung (42) oder der Versorgungsleitung (51) verbindet, oder mit Masse verbindet.

5. Steuerungsvorrichtung nach einem der vorhergehenden Ansprüche, **dadurch gekennzeichnet,**
**dass** an einem Spannungsausgang (43) der Schutzschaltung (4) ein Filterkondensator (C507, C509) oder Ladekondensator zwischen Masse und Spannungsausgang (43) vorgesehen ist, um kurze Spannungsunterbrechungen zu überbrücken, und/oder dass an dem Spannungsausgang (43) der Schutzschaltung (4) ein passives Filternetzwerk vorgesehen ist, aufweisend wenigstens eine Spule und einen Kondensator (L501, C510), um EMV-Störungen zu unterdrücken.

6. Steuerungsvorrichtung nach einem der vorhergehenden Ansprüche, **dadurch gekennzeichnet,**
**dass** der Stromversorgungsanschluss (31) über eine Leitung, vorzugsweise über eine Versorgungsleitung (51), mit einem, vorzugsweise räumlich abgesetzten, SELV-Netzteil (5) verbunden ist.

7. Steuerungsvorrichtung nach einem der vorhergehenden Ansprüche, **dadurch gekennzeichnet,**
**dass** die Verpolschutzschaltung (42) einen in Serie mit der Versorgungsleitung geschalteten Transistor (T100), vorzugsweise MOSFET (T100), insbesondere einen P-MOSFET aufweist.

8. Steuerungsvorrichtung nach einem der vorhergehenden Ansprüche, **dadurch gekennzeichnet,**
**dass** der steuerbare Widerstand (T101) und/oder der Halbleiterschalter und der Transistor (T100) der Verpolschutzschaltung (42) als MOSFET ausgebildet sind, vorzugsweise dass für den MOSFET (100) der Verpolschutzschaltung (42) und für den MOSFET (T101) des steuerbaren Widerstands und/oder des Halbleiterschalters derselbe Transistortyp verwendet wird.

9. Steuerungsvorrichtung nach einem der vorhergehenden Ansprüche, **dadurch gekennzeichnet,**
**dass** der wenigstens eine, vorzugsweise schaltbare, Ausgang (32a, 32b) einen Halbleiter zum Ansteuern eines Aktors oder eines Elektromagneten oder eines Motors der Verriegelungsvorrichtung aufweist, vorzugsweise einen Transistor oder einen FET oder ein Halbleiterrelais, und dass der vorzugsweise schaltbare Ausgang zum Steuern von induktiven Lasten, vorzugsweise bis 2 Ampere, ausgebildet ist.

10. Steuerungsvorrichtung nach einem der vorhergehenden Ansprüche, **dadurch gekennzeichnet,**
**dass** wenigstens einer der, vorzugsweise schaltbaren, Ausgänge (32a, 32b) als PWM-Ausgang zum Ansteuern eines Aktors oder eines Elektromagneten oder eines Motors (63) der Verriegelungsvorrichtung (2, 6) ausgebildet ist.

11. Steuerungsvorrichtung nach einem der vorhergehenden Ansprüche, **dadurch gekennzeichnet,**
**dass** die Steuerungsvorrichtung (3) wenigstens einen Sensoreingang (33) zum Anschließen eines Sensors, insbesondere eines Schließlagesensors einer Tür oder eines Fensters, oder eines Riegelsensors, oder eines Schalters, insbesondere eines Notschalters (7) einer Fluchtwegsicherung aufweist, sowie vorzugsweise einen Mikroprozessor zum Lesen des wenigstens einen Sensoreingangs und zum Ansteuern des wenigstens einen schaltbaren Ausgangs (32a, 32b) aufweist.

12. Steuerungsvorrichtung nach einem der vorhergehenden Ansprüche, **dadurch gekennzeichnet,**
**dass** die Steuerungsvorrichtung (3) eine gemeinsame Platine aufweist, auf der die Schutzschaltung (4) und der Stromversorgungsanschluss (31) sowie der wenigstens eine schaltbare Ausgang (32a, 32b) zum Ansteuern eines Aktors oder eines Elektromagneten oder eines Motors (63) der Verriegelungsvorrichtung (2, 6) gemeinsam angeordnet sind.

13. Verfahren zum Absichern einer Steuerungsvorrichtung (4) nach einem der vorhergehenden Ansprüche, für eine in oder an einer Türe oder eines Fensters eines Gebäudes angeordnete Verriegelungsvorrichtung (2, 6), vorzugsweise für einen Türantrieb und/oder einen Fensterantrieb und/oder eine Feststellvorrichtung und/oder ein Türschloss (6) und/oder einen Türöffner (2),
umfassend wenigstens einen, vorzugsweise schaltbaren, Ausgang (32a, 32b) zum Ansteuern eines Aktors oder eines Elektromagneten oder eines Motors (63) der Verriegelungsvorrichtung sowie einen Stromversorgungsanschluss (31), um die Steuerungsvorrichtung an ein Netzteil (5) anzuschließen,
**dadurch gekennzeichnet,**
**dass** über einen von einem Schwellwertschalter (41) angesteuerten Transistor oder MOSFET (T101) der Stromversorgungsanschluss (31) abgetrennt wird, wenn die Versorgungsspannung an dem Stromversorgungsanschluss (31) oberhalb eines vorgegebenen Spannungswertes liegt und wieder über den Transistor oder den MOSFET (T101) verbunden wird, sobald der Spannungswert der Versorgungsspannung unterhalb des vorgegebenen Spannungswertes liegt.

14. Verfahren nach Anspruch 13,
**dadurch gekennzeichnet,**
**dass** der Stromversorgungsanschluss (31) erst dann wieder verbunden wird, wenn der Spannungswert der Versorgungsspannung unterhalb eines zweiten Spannungswertes liegt, wobei der zweite Spannungswert kleiner ist als der vorgegebene Spannungswert.

15. Verfahren nach Anspruch 13 oder 14,
**dadurch gekennzeichnet,**
**dass** ein Zeitglied vorgesehen ist und der Stromversorgungsanschluss (31) frühestens nach Verstreichen einer durch das Zeitglied vorgebbaren Zeitdauer wieder verbunden wird.

## Claims

1. Control device (3) for a locking device (2, 6) arranged in or on a door or window of a building, preferably for a door drive and/or window drive and/or a hold-open device and/or a door lock (6) and/or a door opener (2),
comprising at least one, preferably switchable, output (32a, 32b) for controlling an actuator or an electromagnet or a motor (63) of the locking device (2, 6),
and a power supply connection (31) for connecting the control device (3) to a power supply unit (5) via a supply line (51),
further comprising a protective circuit (4) connected to the power supply connection (31) in order to protect the control device (3) and/or a locking device connected thereto against overvoltage,
the protective circuit (4) having a controllable resistor (T101) and/or a semiconductor switch which is arranged in series with the supply line (51), and having a threshold value switch (41) whose input is connected indirectly or directly to the supply line (51), in order to measure the voltage present on the supply line (51), the threshold value switch (41) triggering the controllable resistor (T101) and/or the semiconductor switch to disconnect the supply line (51) when the voltage present on the supply line (51) is above a predetermined voltage value,
**characterized in that,**
the protective circuit (4) has a reverse polarity protection circuit (42) between the power supply connection (31) and the controllable resistor (T101) and/or the semiconductor switch.

2. Control device according to claim 1,
**characterized in that,**
the controllable resistor (T101) and/or the semiconductor switch is designed as an FET (field-effect transistor), in particular as a JFET or MOSFET (T101), or IGFET or MISFET.

3. Control device according to claim 1 or 2,
**characterized in that,**
the threshold value switch (41) is designed as a discrete threshold value switch, in particular is designed as a two-stage threshold value switch, preferably has two bipolar transistors (T102, T103).

4. Control device according to one of claims 1 to 3,
**characterized in that,**
the predetermined voltage value is adjustable via a voltage reference, in particular a Z-diode (D101), preferably that the Z-diode (D101) connects an input of the threshold value switch (41) to the reverse polarity protection circuit (42) or the supply line (51), or connects it to the ground.

5. Control device according to any one of the preceding claims, **characterized in that,**
a filter capacitor (C507, C509) or charging capacitor is provided at a voltage output (43) of the protective circuit (4) between the ground and the voltage output (43) in order to bypass short voltage interruptions, and/or
a passive filter network is provided at the voltage output (43) of the protective circuit (4), comprising at least one coil and one capacitor (L501, C510), in order to suppress EMC interference.

6. Control device according to any one of the preceding claims, **characterized in that,**
the power supply connection (31) is connected via a line, preferably via a supply line (51), to a, preferably spatially remote, SELV power supply unit (5).

7. Control device according to any one of the preceding claims, **characterized in that,**
the reverse polarity protection circuit (42) has a transistor (T100), preferably a MOSFET (T100), in particular a P-MOSFET, connected in series with the supply line.

8. Control device according to any one of the preceding claims, **characterized in that,**
the controllable resistor (T101) and/or the semiconductor switch and the transistor (T100) of the reverse polarity protection circuit (42) are designed as a MOSFET, preferably **in that** the same transistor type is used for the MOSFET (100) of the reverse polarity protection circuit (42) and for the MOSFET (T101) of the controllable resistor and/or the semiconductor switch.

9. Control device according to any one of the preceding claims, **characterized in that,**
the at least one, preferably switchable, output (32a, 32b) has a semiconductor for controlling an actuator or an electromagnet or a motor of the locking device, preferably a transistor or an FET or a semiconductor relay, and **in that** the preferably switchable output is designed for controlling inductive loads, preferably up to 2 amperes.

10. Control device according to any one of the preceding claims, **characterized in that,**
at least one of the preferably switchable outputs (32a, 32b) is designed as a PWM output for controlling an actuator or an electromagnet or a motor (63) of the locking device (2, 6).

11. Control device according to any one of the preceding claims, **characterized in that,**
the control device (3) has at least one sensor input (33) for connecting a sensor, in particular a closing position sensor of a door or a window, or a bolt sensor, or a switch, in particular an emergency switch (7) of an escape route safety device, and preferably has a microprocessor for reading the at least one sensor input and for activating the at least one switchable output (32a, 32b).

12. Control device according to any one of the preceding claims, **characterized in that,**
the control device (3) has a common circuit board on which the protective circuit (4) and the power supply connection (31) as well as the at least one switchable output (32a, 32b) for controlling an actuator or an electromagnet or a motor (63) of the locking device (2, 6) are arranged together.

13. Method for securing a control device (4) according to one of the preceding claims, for a locking device (2, 6) arranged in or on a door or window of a building, preferably for a door drive and/or a window drive and/or a hold-open device and/or a door lock (6) and/or a door opener (2),
comprising at least one, preferably switchable, output (32a, 32b) for controlling an actuator or an electromagnet or a motor (63) of the locking device and a power supply connection (31) for connecting the control device to a power supply unit (5),
**characterized in that,**
the power supply connection (31) is disconnected via a transistor or MOSFET (T101) controlled by a threshold value switch (41), when the supply voltage at the power supply connection (31) is above a predetermined voltage value and is reconnected via the transistor or the MOSFET (T101) as soon as the voltage value of the supply voltage is below the predetermined voltage value.

14. Method according to claim 13,
**characterized in that,**
the power supply connection (31) is only reconnected when the voltage value of the supply voltage is below a second voltage value, the second voltage value being lower than the predetermined voltage value.

15. Method according to claim 13 or 14,
**characterized in that**
a timing element is provided and the power supply connection (31) is reconnected at the earliest after a time period that is predeterminable by the timing element has elapsed.

## Revendications

1. Dispositif de commande (3) pour un dispositif de verrouillage (2, 6) disposé dans ou sur une porte ou une fenêtre d'un bâtiment, de préférence pour un entraînement de porte et/ou un entraînement de fenêtre et/ou un dispositif de blocage et/ou une serrure de porte (6) et/ou une gâche électrique (2),
comprenant au moins une sortie (32a, 32b), de préférence commutable, pour commander un actionneur ou un électroaimant ou un moteur (63) du dispositif de verrouillage (2, 6),
ainsi qu'une borne d'alimentation électrique (31) pour raccorder le dispositif de commande (3) à un bloc d'alimentation électrique (5) par l'intermédiaire d'une ligne d'alimentation (51),
comprenant en outre un circuit de protection (4) connecté à la borne d'alimentation électrique (31) pour protéger le dispositif de commande (3) et/ou un dispositif de verrouillage connecté à celui-ci contre les surtensions,
dans lequel le circuit de protection (4) comprend une résistance commandable (T101) et/ou un commutateur à semi-conducteur qui est disposé en série avec la ligne d'alimentation (51), ainsi qu'un commutateur à valeur seuil (41) dont l'entrée est reliée directement ou indirectement à la ligne d'alimentation (51), pour mesurer la tension appliquée à la ligne d'alimentation (51), le commutateur à seuil (41) commandant la résistance commandable (T101) et/ou le commutateur à semi-conducteur pour couper la ligne d'alimentation (51) lorsque la tension appliquée à la ligne d'alimentation (51) est supérieure à une valeur de tension prédéterminée,
**caractérisé en ce que**
le circuit de protection (4) comporte un circuit de protection contre l'inversion de polarité (42) entre la borne d'alimentation électrique (31) et la résistance commandable (T101) et/ou le commutateur à semi-conducteur.

2. Dispositif de commande selon la revendication 1,
**caractérisé en ce que**
la résistance commandable (T101) et/ou le commutateur à semi-conducteur est conçu comme un FET (transistor à effet de champ), en particulier comme un JFET ou un MOSFET (T101), ou un IGFET ou un MISFET.

3. Dispositif de commande selon la revendication 1 ou 2,
**caractérisé en ce que**
le commutateur à valeur de seuil (41) est conçu comme un commutateur à valeur de seuil discret, en particulier comme un commutateur à valeur de seuil à deux niveaux, présentant de préférence deux transistors bipolaires (T102, T103).

4. Dispositif de commande selon l'une quelconque des revendications 1 à 3,
**caractérisé en ce que**
la valeur de tension prédéterminée est réglable par l'intermédiaire d'une référence de tension, en particulier d'une diode Z (D101), de préférence en ce que la diode Z (D101) relie une entrée du commutateur à valeur de seuil (41) au circuit de protection contre l'inversion de polarité (42) ou à la ligne d'alimentation (51), ou la relie à la masse.

5. Dispositif de commande selon l'une quelconque des revendications précédentes,
**caractérisé en ce que**
il est prévu à une sortie de tension (43) du circuit de protection (4) un condensateur de filtrage (C507, C509) ou un condensateur de charge entre la masse et la sortie de tension (43), afin de surmonter de courtes interruptions de tension, et/ou
il est prévu à la sortie de tension (43) du circuit de protection (4) un réseau de filtrage passif, présentant au moins une bobine et un condensateur (L501, C510), afin de supprimer les perturbations CEM.

6. Dispositif de commande selon l'une quelconque des revendications précédentes,
**caractérisé en ce que**
la borne d'alimentation électrique (31) est relié par une ligne, de préférence par une ligne d'alimentation (51), à un bloc d'alimentation SELV (5), de préférence éloigné dans l'espace.

7. Dispositif de commande selon l'une quelconque des revendications précédentes,
**caractérisé en ce que**
le circuit de protection contre l'inversion de polarité (42) comporte un transistor (T100), de préférence un MOSFET (T100), notamment un P-MOSFET, monté en série avec la ligne d'alimentation.

8. Dispositif de commande selon l'une quelconque des revendications précédentes,
**caractérisé en ce que**
la résistance commandable (T101) et/ou le commutateur à semi-conducteur et le transistor (T100) du circuit de protection contre l'inversion de polarité (42) sont réalisés sous forme de MOSFET, de préférence que le même type de transistor est utilisé pour le MOSFET (100) du circuit de protection contre l'inversion de polarité (42) et pour le MOSFET (T101) de la résistance commandable et/ou du commutateur à semi-conducteur.

9. Dispositif de commande selon l'une quelconque des revendications précédentes,
**caractérisé en ce que**
**en ce que** l'au moins une sortie (32a, 32b), de préférence commutable, comporte un semi-conducteur pour commander un actionneur ou un électroaimant ou un moteur du dispositif de verrouillage, de préférence un transistor ou un FET ou un relais à semi-conducteur, et **en ce que** la sortie, de préférence commutable, est conçue pour commander des charges inductives, de préférence jusqu'à 2 ampères.

10. Dispositif de commande selon l'une quelconque des revendications précédentes,
**caractérisé en ce que**
qu'au moins l'une des sorties (32a, 32b), de préférence commutables, est conçue comme une sortie PWM pour commander un actionneur ou un électroaimant ou un moteur (63) du dispositif de verrouillage (2, 6).

11. Dispositif de commande selon l'une quelconque des revendications précédentes,
**caractérisé en ce que**
le dispositif de commande (3) présente au moins une entrée de capteur (33) pour le raccordement d'un capteur, en particulier d'un capteur de position de fermeture d'une porte ou d'une fenêtre, ou d'un capteur de verrou, ou d'un interrupteur, en particulier d'un interrupteur de secours (7) d'une sécurité d'issue de secours, ainsi que, de préférence, un microprocesseur pour la lecture de la au moins une entrée de capteur et pour la commande de la au moins une sortie commutable (32a, 32b).

12. Dispositif de commande selon l'une quelconque des revendications précédentes,
**caractérisé en ce que**
le dispositif de commande (3) présente une carte de circuit imprimé commune sur laquelle sont disposés en commun le circuit de protection (4) et la borne d'alimentation électrique (31) ainsi que l'au moins une sortie commutable (32a, 32b) pour commander un actionneur ou un électroaimant ou un moteur (63) du dispositif de verrouillage (2, 6).

13. Procédé de sécurisation d'un dispositif de commande (4) selon l'une des revendications précédentes, pour un dispositif de verrouillage (2, 6) disposé dans ou sur une porte ou une fenêtre d'un bâtiment, de préférence pour un entraînement de porte et/ou un entraînement de fenêtre et/ou un dispositif de blocage et/ou une serrure de porte (6) et/ou une gâche électrique (2),
comprenant au moins une sortie (32a, 32b), de préférence commutable, pour commander un actionneur ou un électroaimant ou un moteur (63) du dispositif de verrouillage, ainsi qu'une borne d'alimentation électrique (31), pour raccorder le dispositif de commande à un bloc d'alimentation (5),
**caractérisé en ce que**
la borne d'alimentation électrique (31) est déconnectée par l'intermédiaire d'un transistor ou d'un MOSFET (T101) commandé par un commutateur à valeur seuil (41), lorsque la tension d'alimentation sur la borne d'alimentation électrique (31) est supérieure à une valeur de tension prédéterminée et est reconnectée par l'intermédiaire du transistor ou du MOSFET (T101) dès que la valeur de la tension d'alimentation est inférieure à la valeur de tension prédéterminée.

14. Procédé selon la revendication 13,
**caractérisé en ce que**
la borne d'alimentation électrique (31) n'est reconnectée que lorsque la valeur de tension de la tension d'alimentation est inférieure à une deuxième valeur de tension, la deuxième valeur de tension étant inférieure à la valeur de tension prédéterminée.

15. Procédé selon la revendication 13 ou 14,
**caractérisé en ce que**
un temporisateur est prévu et que la borne d'alimentation électrique (31) est à nouveau connecté au plus tôt après l'écoulement d'une durée pouvant être prédéfinie par le temporisateur.
